# EUROPEAN PATENT APPLICATION

(11) **EP 2 094 057 A2**
(43) Date of publication of application: **26.08.2009**
(21) Application number: 09150788.9
(22) Date of filing: 16.01.2009
(51) Int. Cl.: H04W 88/06

(54) **Multi-standby mobile terminal and user identification card selection method for the same**

(30) Priority: 22.01.2008 KR 20080006634
(71) Applicant: Samsung Electronics Co., Ltd., Suwon-si Gyeonggi-do (KR)
(72) Inventor: You, Sun Mi, Suwon-si Gyeonggi-do (KR)
(74) Representative: Harrison Goddard Foote

(57) **Abstract**

A multi-standby mobile terminal and user identification card selection method for the same are provided. The multi-standby mobile terminal stores card setting information that associates multiple user identification cards with selection criteria including time, region, group, and phone number. Hence, an outgoing call can be made using a user identification card automatically selected according to the selection criteria of the card setting information.

## Description

### BACKGROUND OF THE INVENTION

### 1. Field of the Invention:

The present invention relates to a multi-standby mobile terminal. More particularly, the present invention relates to a multi-standby mobile terminal and user identification card selection method for the same that enable a user to make an outgoing call by using a user identification card automatically selected in accordance with card setting information associating user identification cards with phone numbers, groups, times or regions.

### 2. Description of the Related Art:

With rapid advances in communication technologies, modern mobile terminals provide various functions related to voice calls, text messages, video calls, electronic organizers, Internet accesses, and the like. More particularly, multi-standby mobile terminals, which can communicate with two or more different wireless communication networks, have been developed. A mobile terminal simultaneously supporting a Code Division Multiple Access (CDMA) network and a Global System for Mobile communications (GSM) network is an example of a multi-standby mobile terminal. This mobile terminal can wait for services from both the CDMA network and the GSM network (in a multi-standby mode).

In an existing multi-standby mobile terminal, to place an outgoing call, the user may select one of user identification cards or use a default user identification card. In this case, when the user desires to utilize different user identification cards depending upon times or regions, the user has to select an appropriate user identification card or has to switch the default user identification card.

Accordingly, a need exists for a multi-standby mobile terminal and method for selecting one of user identification cards for an outgoing call according to settings of times or regions.

### SUMMARY OF THE INVENTION

An aspect of the present invention is to address at least the above-mentioned problems and/or disadvantages and to provide at least the advantages described below. Accordingly, an aspect of the present invention is to provide a multi-standby mobile terminal and user identification card selection method for the same, wherein after storing card setting information associating user identification cards with phone numbers, groups, times or regions, the user may place an outgoing call by using a user identification card automatically selected in accordance with the card setting information.

In accordance with an aspect of the present invention, a method of user identification card selection for a multi-standby mobile terminal is provided. The method includes searching for, in response to an outgoing call request, card setting information provided for selecting one of multiple user identification cards, and making a call by using a user identification card selected according to the card setting information.

In accordance with another aspect of the present invention, a multi-standby mobile terminal is provided. The terminal includes a plurality of card slots for accommodating individual user identification cards, a storage unit for storing card setting information provided for selecting one of the user identification cards, and a control unit for making, in response to an outgoing call request, a call using a user identification card selected according to the card setting information.

In accordance with another aspect of the present invention, the multi-standby mobile terminal and user identification card selection method for the same may enable a user to make an outgoing call by using a user identification card automatically selected on the basis of selection criteria including phone number, group, time and region, thereby enhancing user convenience.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiment of the present invention will be more apparent from the following description taken in conjunction with the accompanying drawings, in which:

FIG. 1 is a block diagram illustrating a dual-standby mobile terminal according to an exemplary embodiment of the present invention; and

FIG. 2 is a flowchart illustrating a method of selecting a user identification card according to another exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Particular terms may be defined to describe the invention in the best manner. Accordingly, the meaning of specific terms or words used in the specification and the claims should not be limited to the literal or commonly employed sense, but should be construed in accordance with the spirit of the invention. The descriptions of the various embodiments are to be construed as an example only and do not describe every possible instance of the invention. Therefore, it should be understood that various changes may be made and equivalents may be substituted for elements of the invention.

In the descriptions, the term "user identification card" is a generic term referring to a card containing personal information in a mobile terminal to provide various services related to subscriber authentication, billing and security. An example of a user identification card includes a Subscriber Identity Module (SIM), Universal Subscriber Identity Module (USIM), Universal Integrated Circuit Card (UICC), and User Identity Module (UIM).

The term "card setting information" refers to stored information that associates user identification cards with selection criteria including phone number, group, time and region. The user can place an outgoing call using a user identification card automatically selected on the basis of a selection criterion and the card setting information.

A dual-standby mobile terminal capable of receiving services from two different networks is described as a multi-standby mobile terminal. However, the present invention is not limited thereto. The multi-standby mobile terminal of the present invention may employ multiple user identification cards, and can communicate with two or more of a CDMA network, a GSM network, a General Packet Radio Services (GPRS) network, an enhanced data rates for GSM evolution (EDGE) network, a Universal Mobile Telecommunications System (UMTS) network, a Wideband CDMA (WCDMA), a third Generation Partnership Project (3GPP) network, and any extended or modified one of these. The multi-standby mobile terminal may also communicate with wireless communication networks of the same type. For example, the multi-standby mobile terminal can communicate with two GSM networks.

Hereinafter, a dual-standby mobile terminal communicating with a CDMA network and a GSM network among various types of wireless communication networks is described as a multi-standby mobile terminal.

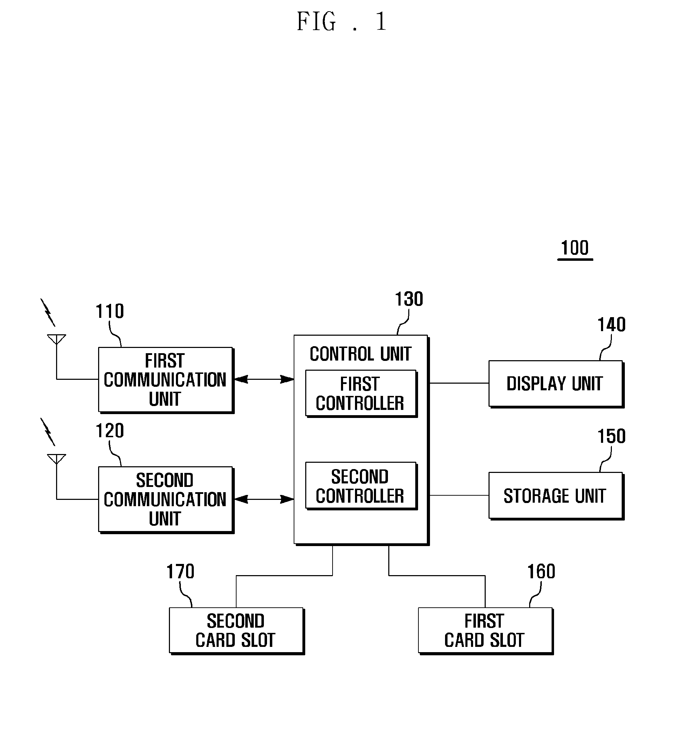

FIG. 1 is a block diagram illustrating a dual-standby mobile terminal according to an exemplary embodiment of the present invention.

Referring to FIG. 1, a dual-standby mobile terminal 100 includes a first communication unit 110, a second communication unit 120, a control unit 130, a display unit 140, a storage unit 150, a first card slot 160, and a second card slot 170.

The first communication unit 110 and second communication unit 120 send and receive Radio Frequency (RF) signals to and from particular wireless communication networks, and each may include a signal separator to separate an incoming signal and outgoing signal from each other, an RF transmitter (not shown) to upconvert the frequency of a signal to be sent and to amplify the signal, and an RF receiver (not shown) to low-noise amplify a received signal and to downconvert the frequency of the signal. The first communication unit 110 and second communication unit 120 can communicate with a CDMA network and a GSM network, respectively. However, the present invention is not limited thereto. For example, the first communication unit 110 and second communication unit 120 may communicate with pairs of a GSM network and a CDMA network, a CDMA network and a WCDMA network, and a GSM network and another GSM network.

Although, in FIG. 1, the first communication unit 110 and second communication unit 120 are depicted to have separate antennas, they may share a single antenna.

Each of the first card slot 160 and the second card slot 170 accommodates a user identification card, is electrically connected to the control unit 130, and may include contact terminals to make an electrical contact with the user identification card. User identification cards that can be installed in the first card slot 160 and second card slot 170 can be a SIM card, a UIM card, a UICC card, a USIM card and the like. More particularly, user identification cards supporting CDMA service and GSM service can be installed in the first card slot 160 and the second card slot 170, respectively. If a single user identification card can support both the CDMA service and the GSM service, the first card slot 160 and second card slot 170 would be realized as a single card slot.

The display unit 140 displays various menus of the dual-standby mobile terminal 100, information input by the user, and information to be provided to the user. The display unit 140 may include a panel of Liquid Crystal Display (LCD) devices, and may also employ another type of display technology. In particular, after activation of a mode that enables one of user identification cards to be selected for an outgoing call according to a selection criterion such as phone number, group, time or region, the display unit 140 may display a card selection window under the control of the control unit 130. The selection of a user identification card is described later in connection with the control unit 130.

The storage unit 150 may store application programs necessary for the overall operations of the dual-standby mobile terminal 100, user data, and phonebook information. In particular, the storage unit 150 can store the card setting information. The storage unit 150 may include a program storage section and a data storage section.

The program storage section may store an operating system to boot the dual-standby mobile terminal 100, a message application program to handle messages, application programs necessary for supplementary functions related to, for example, an audio sound reproduction, a playback of images or moving images, and a mobile broadcast reception. In particular, the program storage section may store an application program to automatically select a user identification card for an outgoing call.

The data storage section stores data generated by the utilization of the dual-standby mobile terminal 100, and may store user data related to various supplementary functions (such as moving images, audio data and contents), and information on the user data. The data storage section can store a phonebook. In particular, the data storage section may store the card setting information that specifies the criterion to select one of user identification cards for an outgoing call. Here, the selection criterion may be a phone number or a group label stored in the phonebook, time, or region.

The storage unit 150 may store priority information regarding the selection criteria including time, region, group, and phone number. For example, when the user attempts to place a call to a particular person, if the card setting information specifies a CDMA network by phone number and also specifies a GSM network by region, the control unit 130 would face a conflict in selecting a user identification card. In this case, the control unit 130 may select a desired user identification card for an outgoing call on the basis of priorities between the selection criteria stored in the storage unit 150. A menu window may be provided to the dual-standby mobile terminal 100 to permit the user to set the priority between the selection criteria. The card setting information including card selection criteria and the priorities therebetween can be stored in at least one of the storage unit 150 and a memory of the user identification cards.

The storage unit 150 may store a base station map relating to network identifiers with regions. The base station map can contain information regarding mappings between regions covered by base stations and network identifiers of the base stations. The base station map can be received from a base station or manually set by the user.

The control unit 130 controls the overall operations of the dual-standby mobile terminal 100, and signal exchanges between the internal blocks thereof. The control unit 130 may include a first controller to control communications through the first communication unit 110, and a second controller to control communications through the second communication unit 120. One of the first controller and the second controller may act as a primary controller, and the other controller may act as an auxiliary controller.

When the user attempts to place an outgoing call, the control unit 130 checks card setting information stored in the storage unit 150 to select a user identification card to be used for the outgoing call. More particularly, to select a user identification card by region, the control unit 130 may identify the current location by using a network identifier of the corresponding base station. That is, the control unit 130 can identify the current location by comparing the network identifier of the base station with those contained in the base station map. The control unit 130 can use the current time or the card setting information together with groups or phone numbers to select a user identification card according to the selection criteria such as time, group and phone number.

When different user identification cards are selectable by the card collection criteria, the control unit 130 can select one of the user identification cards on the basis of priorities between the selection criteria. To be more specific, it is assumed that the card setting information is set as in Table 1. Table 1 illustrates user identification cards, which are associated with communication networks, classified by the selection criteria including time, region and group.

**[Table 1]**

| Time | | Region | | Group | | Priority |
|---|---|---|---|---|---|---|
| 09:00 ∼ 18:00 | CDMA | A | CDMA | Friend | GSM | Region |
| 18:00 ∼ 24:00 | GSM | B | CDMA | Family | GSM | Time |
| 24:00 ∼ 09:00 | - | C | GSM | Colleague | CDMA | Group |

Referring to Table 1, when the user at region A attempts to place a call to a co-worker at 12:00 o'clock, the control unit 130 can select a CDMA-specific user identification card for the outgoing call because only the CDMA-specific user identification card is selectable by the criteria including time, region and group. Alternatively, when the user at region A attempts to make a call to a friend or a family member at 12:00 o'clock, the CDMA-specific user identification card is selectable by time or region and the GSM-specific user identification card is selectable by group. This may cause difficulty in selecting a user identification card. In this case, the control unit 130 can utilize the priority between the selection criteria. In Table 1, the criterion 'region' takes priority over other criteria, and hence the control unit 130 may select the CDMA-specific user identification card. Although the card setting information is illustrated in a tabular format as in Table 1, it may also be stored in any other format.

When the priority between the selection criteria is not set, the control unit 130 may select a user identification card at random. Alternatively, the control unit 130 may compare strengths of received signals from different wireless communication networks with each other to select a user identification card associated with one of the networks with the highest signal quality. For example, the dual-standby mobile terminal 100 may compare the strength of a received signal from the CDMA network with that from the GSM network, and select a user identification card related to one of the CDMA network and GSM network having a better signal quality for an outgoing call. Alternatively, the control unit 130 may control the display unit 140 to display a selection window for requesting the user to select a desired user identification card.

When a particular network is not available for the dual-standby mobile terminal 100 (for example, out of the service coverage area of a communication network or installation of only one user identification card), the control unit 130 does not search for the card setting information and may permit an outgoing call to be placed through an available wireless communication network. Alternatively, the control unit 130 may inform the user of unavailability of a particular network, and request the user to decide whether to make a call through an available network.

Although not shown, the dual-standby mobile terminal 100 may further include one or more of supplementary units such as a camera module, a broadcast reception module, an audio signal output device like a speaker, a voice signal input device like a microphone, a connection terminal to exchange data with an external digital appliance, a charge terminal, a digital audio player like an MP3 module, and the like.

With the trend of digital convergence, mobile terminals are extremely diversified. Hence, it should be apparent to those skilled in the art that the dual-standby mobile terminal 100 may further include units corresponding to those described above.

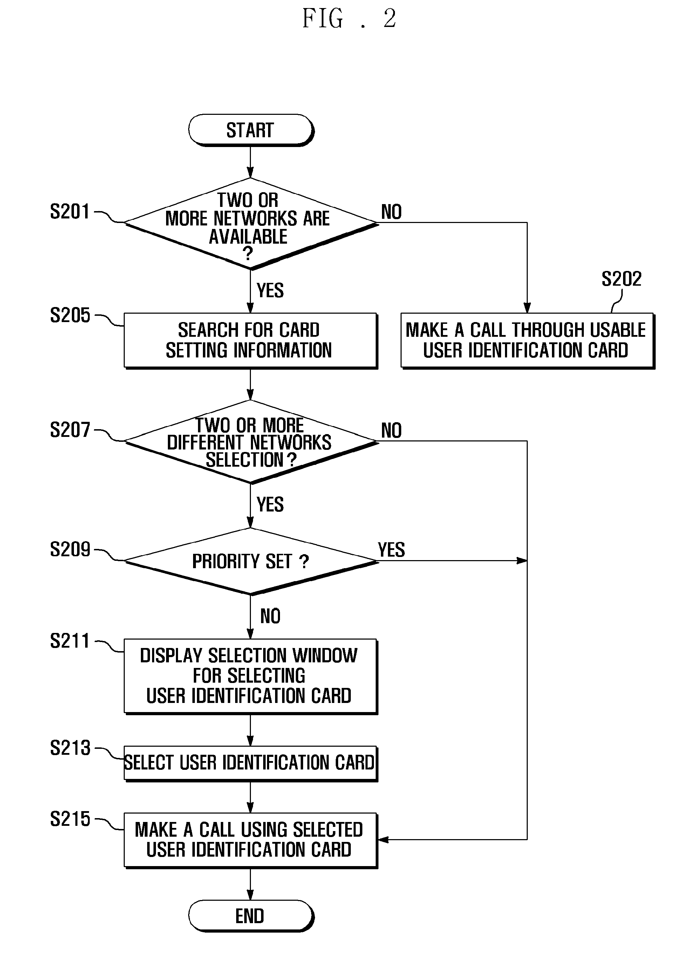

Hereinabove, the configuration of the dual-standby mobile terminal 100 is described in connection with FIG. 1. Next, selection of a user identification card is described in connection with FIG. 2.

FIG. 2 is a flowchart illustrating a method of selecting a user identification card according to another exemplary embodiment of the present invention.

Referring to FIGs. 1 and 2, in response to a request for an outgoing call, the control unit 130 of the dual-standby mobile terminal 100 determines whether the dual-standby mobile terminal 100 is in a dual-standby mode in which two wireless communication networks are both available for an outgoing call in step S201. If only one wireless communication network is available, the control unit 130 makes a requested call using a user identification card related to the available wireless communication network in step S202. In addition, although not shown, the control unit 130 may control the display unit to display an indicator for indicating availability of only one network, and request the user to decide whether to place a call through the available network. Here, the wireless communication network may be one of a CDMA network and a GSM network.

If both wireless communication networks are available (dual-standby mode), the control unit 130 searches for the card setting information in step S205. Here, the card setting information associates user identification cards with selection criteria including phone number, group, time and region, for use of a user identification card according to the selection criteria. The control unit 130 may receive a network identifier of the corresponding base station to identify the current location, which can be used for selecting a user identification card by region. The control unit 130 determines whether the selection criteria result in selection of different networks in step S207. Two or more different networks may lead to a conflict in selecting a user identification card.

If the selection criteria result in selection of a single network, the control unit 130 places a call using a user identification card selected according to the card setting information in step S215. If the selection criteria result in a selection of different networks, the control unit 130 determines whether a priority between the selection criteria is set in the card setting information in step S209. If a priority between the selection criteria is set, the control unit 130 places a call using a user identification card selected according to the priority in step S215. If a priority is not set, the control unit 130 controls the display unit 140 to display a selection window for requesting the user to select a user identification card in step S211. When the user selects a user identification card in step S213, the control unit 130 places a call using the selected user identification card in step S215. Alternatively, at step S211, when the priority between the selection criteria is not set, the control unit 130 may randomly select a user identification card for an outgoing call, or may compare strengths of signals from available wireless communication networks with each other and select a user identification card related to the network with the highest signal quality.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined in the appended claims and their equivalents.

## Claims

1. A method of selecting a user identification card for a multi-standby mobile terminal, the method comprising:
searching for card setting information provided for selecting one of multiple user identification cards; and
making a call using the selected one of the multiple user identification cards according to the card setting information.

2. The method of claim 1, wherein the user identification cards are associated with one of CDMA and GSM networks.

3. The method of claim 1, wherein the making of the call comprises:
selecting one of the user identification cards according to selection criteria including at least one of time, region, group, and phone number; and
placing a call using the selected one of the user identification cards.

4. The method of claim 3, wherein the making of the call comprises:
setting a priority between the selection criteria;
selecting, when the selection criteria result in a selection of different user identification cards, one of the different user identification cards according to the priority; and
placing a call using the selected one of the different user identification cards.

5. The method of claim 3, wherein the making of the call comprises displaying, when the selection criteria result in a selection of different user identification cards and no priority is set between the selection criteria, a selection window permitting a user to select one of the different user identification cards.

6. The method of claim 3, wherein the making of the call comprises randomly selecting, when the selection criteria result in a selection of different user identification cards and no priority is set between the selection criteria, one of the different user identification cards.

7. The method of claim 3, wherein the making of the call comprises:
comparing, when the selection criteria result in a selection of different user identification cards and no priority is set between the selection criteria, strengths of signals from available wireless communication networks with each other; and
selecting one of the different user identification cards according to the comparison result.

8. A multi-standby mobile terminal, the terminal comprising:
a plurality of card slots for accommodating individual user identification cards;
a storage unit for storing card setting information provided for selecting one of the user identification cards; and
a control unit for making, in response to an outgoing call request, a call using the selected one of the user identification cards according to the card setting information.

9. The terminal of claim 8, wherein the user identification cards are associated with one of CDMA and GSM networks.

10. The terminal of any of claims 8 to 9, wherein the card setting information comprises information that associates the user identification cards with selection criteria including at least one of time, region, group and phone number to allow one of the user identification cards to be selected for an outgoing call.

11. The terminal of claim 10, wherein the card setting information comprises a priority between the selection criteria that enables selecting, when the selection criteria result in a selection of different user identification cards, one of the different user identification cards according to the priority.

12. The terminal of claim 10, wherein the control unit informs, when the selection criteria result in a selection of different user identification cards and no priority is set between the selection criteria, a user of a selection conflict and displays a selection window permitting the user to select one of the different user identification cards.

13. The terminal of claim 10, wherein the control unit randomly selects, when the selection criteria result in a selection of different user identification cards and no priority is set between the selection criteria, one of the different user identification cards.

14. The terminal of claim 10, wherein the control unit compares, when the selection criteria result in a selection of different user identification cards and no priority is set between the selection criteria, strengths of signals from available wireless communication networks with each other, and selects one of the different user identification cards according to the comparison result.
